# EUROPÄISCHE PATENTSCHRIFT

(11) **EP 2 443 370 B1**
(45) Veröffentlichungstag und Bekanntmachung des Hinweises auf die Patenterteilung: **01.05.2013**
(21) Anmeldenummer: 11705509.5
(22) Anmeldetag: 18.02.2011
(51) Int. Cl.: F16K 31/00

(54) **VENTIL ZUR STEUERUNG EINES STRÖMUNGSKANALES**
VALVE FOR CONTROLLING A FLOW CHANNEL
SOUPAPE DE COMMANDE UNE CONDUIT D'ECOULEMENT

(30) Priorität: 24.02.2010 DE 102010009173
(43) Veröffentlichungstag der Anmeldung: 25.04.2012
(73) Patentinhaber: Otto Egelhof GmbH & Co. KG, 70736 Fellbach (DE)
(72) Erfinder: SOHN, Jürgen, 73732 Esslingen (DE)
(74) Vertreter: Mammel und Maser
(86) Internationale Anmeldenummer: PCT/EP2011/052434
(87) Internationale Veröffentlichungsnummer: WO 2011/104188

(56) Entgegenhaltungen:
- DE-A1-102005 021 975
- GB-A- 2 217 816
- JP-A- 1 141 284
- US-A- 4 336 903

## Beschreibung

Die Erfindung betrifft ein Ventil zur Steuerung eines Strömungskanales, welches mit einem Drosselkörper in dem Strömungskanal zur Bildung einer Drosselstelle angeordnet ist.

Aus der DE 10 2005 021 975 A1 ist beispielsweise ein variables Drosselventil bekannt geworden, welches für eine hydraulische Betätigungseinrichtung eingesetzt wird. Dieses umfasst ein Gehäuse, durch das ein Fluidkanal verläuft. Innerhalb des Fluidkanals ist ein als Thermobimetall-Schnappscheibe ausgebildetes Ventilelement angeordnet, welches bei einer Temperaturänderung selbständig eine Form- oder Lageänderung zur Beeinflussung des Querschnitts des Fluidkanals ausführt. Diese Thermobimetall-Schnappscheibe springt beim Überschreiten einer vorgegebenen Schnapptemperatur in eine entgegengesetzte Form um, wobei diese dadurch einen variablen Kanal verschließt und somit eine Querschnittsveränderung des gesamten Strömungsquerschnittes erzeugt. Sobald die Temperatur unterhalb einer bestimmten Schnapptemperatur absinkt, springt die Schnappscheibe wieder in die Ausgangsform zurück. Somit ist nur zu einer bestimmten Schnapptemperatur eine Ansteuerung zur Querschnittsveränderung vorgesehen.

Des Weiteren sind Ventile bekannt, insbesondere Drosselventile, welche beispielsweise für Türschließer oftmals auch im Außenbereich eingesetzt werden. Die hydraulischen Türschließer weisen einen in einem Schließergehäuse angeordneten, mit einer Feder beaufschlagten Kolben auf, welcher mit einer Welle zusammenwirkt, an der ein Hebel zum Betätigen einer Tür angeordnet ist. Beim Öffnen der Tür wird der Hebel betätigt und über die Welle und den Kolben die am Kolben anliegende Feder gespannt. Dabei kann die im Schließergehäuse befindliche Hydraulikflüssigkeit über Hydraulikkanäle und Ventile von einer Kolbenseite auf die andere überströmen, da sich die Kolbenräume beidseits des Kolbens durch dessen Verschiebung verändern. Dabei wird beim Öffnen der Tür ein möglichst leichtes Überströmen der Hydraulikflüssigkeit ermöglicht, um ein ungebremstes Betätigen der Tür zu erzielen. Beim selbständigen Schließen der Tür wird durch das Entspannen der beim Öffnen gespannten Feder der Kolben wieder in seine Ausgangslage zurückgeführt, wobei die Hydraulikflüssigkeit wiederum überströmen beziehungsweise zurückströmen muss. Durch die Anordnung von Hydraulikkanälen mit Ventilen kann der Schließvorgang gebremst erfolgen, wobei mehrere Phasen des Schließvorgangs mit unterschiedlichen Schließgeschwindigkeiten möglich sind, wodurch ein sicheres Schließen der Tür erfolgen kann.

Solche Türschließer arbeiten nach dem Verdrängerprinzip. Durch die temperaturabhängige Viskosität des Fluides, insbesondere der Hydraulikflüssigkeit, ist besonders bei Außentüren witterungsbedingt ein regelmäßiges Nachstellen der Ventile erforderlich, um gleichbleibende Bedingungen zu erzielen und das gewünschte Schließverhalten zu gewährleisten. Gleiches gilt für weitere Einsatzbereiche, bei denen an einer Drosselstelle aufgrund der temperaturabhängigen Viskositätsänderung des Fluides unterschiedliche Arbeitsbedingungen von Vorrichtungen, Gegenständen oder dergleichen eingestellt werden.

Der Erfindung liegt deshalb die Aufgabe zugrunde, ein Ventil zu schaffen, welches die Temperaturänderungen erfasst und die temperaturbedingten Viskositätsänderungen der Hydraulikflüssigkeit selbständig ausgleicht.

Diese Aufgabe wird erfindungsgemäß durch die Merkmale des Anspruchs 1 gelöst. Weitere vorteilhafte Ausgestaltungen und Weiterbildungen sind in den weiteren unabhängigen Ansprüchen angegeben.

Durch das erfindungsgemäße Ventil zur Steuerung eines Strömungskanales wird zum einen die Einstellung eines konstanten Strömungsquerschnittes durch die Grundeinstellung eines Drosselkörpers des Ventils zum Strömungskanal ermöglicht und zum anderen in Abhängigkeit der temperaturbedingten Viskositätsänderung des Fluides eine kontinuierliche Querschnittänderung der Bypasspassage des Bypassventils zusätzlich zum Drosselquerschnitt der Drosselstelle angesteuert. Dadurch kann erzielt werden, dass bei einer sinkenden Umgebungs- oder Außentemperatur, bei der sich die Viskosität des Fluides erhöht, der Öffnungsquerschnitt der Drosselstelle im Strömungskanal durch das ansteuerbare Bypassventil vergrößert wird, um die Viskositätszunahme auszugleichen, so dass ein erhöhter Massenstrom des Fluides die Drosselstelle durchströmen und die eingestellte Zeitdauer zur Ansteuerung einer Bewegung durch das Fluid gegenüber einer davon abweichenden Viskosität beibehalten werden kann. Sofern beispielsweise die Umgebungs- oder Außentemperatur steigt, sinkt wiederum die Viskosität des Fluides, so dass ein erhöhter Massendurchfluss gegeben wäre. Durch die unmittelbar temperaturabhängige Ansteuerung des Bypassventils, welches teilweise oder vollständig schließt, kann wiederum die Sollzeit für den Stellvorgang durch die Verringerung des Drosselquerschnitts eingestellt und beibehalten werden. Die Temperatur des Fluides stellt somit die Regelgröße für den veränderbaren Durchflussquerschnitt der Bypasspassage des Bypassventils dar und ermöglicht eine kontinuierliche Veränderung des Drosselquershnitts des Bypassventils in Abhängigkeit der Temperatur des Fluids. Durch die Integration des temperaturabhängig ansteuerbaren Bypassventils in das Ventil, kann der Aufbau der bisherigen Drosselstelle grundsätzlich beibehalten werden, so dass Ventile bereitgestellt werden können, die durch einen Austausch der bisherigen Ventile mit deren nachteiligen Eigenschaften bezüglich der Ansteuerung des Massendurchflusses in einfacher Weise ersetzt werden können.

Nach einer bevorzugten Ausgestaltung der Erfindung ist vorgesehen, dass das Bypassventil ein Ventilelement aufweist, welches zumindest eine Bypassöffnung öffnet und schließt und die Bypasspassage ansteuert und vorzugsweise die Bypasspassage eine Querschnittsvergrößerung der Drosselstelle bewirkt und insbesondere dem Drosselkörper zugeordnet ist, der vorzugsweise einen konstanten Drosselquerschnitt zum Strömungskanal bildet. Dadurch wird ein konstruktiv einfacher Aufbau des Ventils geschaffen, wodurch die durch die Anordnung des Drosselkörpers zum Strömungskanal konstant ausgebildete Drosselstelle bei temperaturbedingten Viskositätsänderungen des Fluides vergrößert werden kann.

Alternativ weist das Bypassventil ein Ventilelement auf, welches zumindest eine Bypassöffnung am Außenumfang des Drosselkörpers öffnet oder schließt und eine den Drosselkörper durchquerende Bypasspassage ansteuert. Dadurch ist der Durchflussquerschnitt der Drosselstelle temperaturabhängig vergrößerbar, um die zunehmende Viskositätsänderung bei sinkenden Umgebungstemperaturen zu kompensieren.

Des Weiteren ist das Bypassventil bevorzugt in einem Ventilgehäuse angeordnet und die zumindest eine Bypassöffnung verbindet eine Außenseite des Ventilgehäuses mit einer im Ventilgehäuse angeordnete Kammer. Die in dem Ventilgehäuse angeordnete Kammer ermöglicht die vollständige Integration und Aufnahme eines Bypassventils. Gleichzeitig sind dadurch ein einfacher Aufbau und eine geschlossene Anordnung durch einen einfachen Austausch eines solchen Ventils möglich.

In der Kammer im Ventilgehäuse ist bevorzugt das Ventilelement verschiebbar geführt, so dass dieses in einer Schließstellung die zumindest eine Bypassöffnung schließt. Das Ventilelement ist dabei bevorzugt als Schieber ausgebildet, so dass die zumindest eine in einer Wand des Ventilgehäuses angeordnete Bypassöffnung durch eine einfache Verschiebebewegung des Ventilelementes geschlossen, nur teilweise geöffnet oder geöffnet werden kann und der Durchflussquerschnitt temperaturabhängig einstellbar ist. Dafür weist der Schieber vorzugsweise einen äußeren, sich an der Kammerwand abstützenden Umfangsabschnitt auf, so dass durch diesen Umfangsabschnitt sowohl eine Führung des Ventilelementes als auch eine Schließfunktion der Bypassöffnung gegeben ist. Alternativ kann auch vorgesehen sein, dass diese beiden Funktionen getrennt an dem Schieber ausgebildet sind.

Des Weiteren ist der Drosselkörper bevorzugt als Wandabschnitt am Außenumfang des Ventilgehäuses, insbesondere als feste Gehäusekontur, vorgesehen. Die zumindest eine Bypassöffnung des Bypassventils mündet beispielsweise in die Außenumfangsfläche des Drosselkörpers oder grenzt daran an oder steht in Wirkverbindung mit dem Drosselkörper. Die Positionierung und Anordnung kann vielfältig ausgebildet sein, wobei ein Zusammenwirken des Bypassventils und des Drosselkörpers derart vorgesehen ist, dass bei einer temperaturbedingten Viskositätsänderung eine Veränderung des gesamten Drosselquerschnittes im Strömungskanal erzielbar ist.

Das Ventilelement des Bypassventils ist bevorzugt als zylindrischer Hohlkörper ausgebildet, an dessen einer Stirnseite ein Kraftspeicherelement und an dessen anderer Stirnseite ein thermisches Stellglied angreift. Das thermische Stellglied ist vorzugsweise ebenso als Kraftspeicherelement ausgebildet. Durch die beidseitig angeordneten Kraftspeicherelemente ist das Ventilelement verschiebbar in der Kammer geführt. Dieses kann bevorzugt als rotationssymmetrisches Bauteil ausgebildet sein, wobei dessen Außenumfang gleichzeitig die Führungsflächen des Ventilelementes in einer Innenwand des Ventilgehäuses darstellt. Bevorzugt ist eine zentrale Durchgangsbohrung im Ventilelement vorgesehen, so dass das in das Ventilgehäuse einströmende Fluid sich vollständig in der Kammer ausbreiten kann. Durch diese Anordnung wird ein schwimmendes Ventilelement geschaffen, welches in Abhängigkeit der Kraftspeicherelemente in eine Öffnungs- und/oder Schließposition überführbar ist. Die Temperatur des Fluides beeinflusst die Stellkraft des thermischen Stellgliedes sowohl beim geschlossenen Bypassventil als auch beim geöffneten Bypassventil. Bei geschlossenen Bypassventilen wird dies bevorzugt dadurch ermöglicht, dass die Kammer, in welcher das thermische Stellglied positioniert ist, außen umströmt wird.

Bevorzugt ist vorgesehen, dass das temperaturabhängig ansteuerbare Bypassventil als Kraftspeicherelement ein Rückstellfederelement aufweist, welches zwischen einem Kammerboden und dem Ventilelement angreift sowie als Steuerungseinrichtung das thermische Stellglied aufweist, welches vorzugsweise als Kraftspeicherelement aus einer Formgedächtnislegierung ausgebildet ist und zwischen der Kammerdecke und dem Ventilelement angreift und in Schließrichtung bei einer thermischen Änderung wirkt. Dabei kann beispielsweise bei einer steigenden Außentemperatur die Schließkraft des thermischen Stellgliedes größer als die des Rückstellfederelementes sein, so dass die Bypassöffnungen durch das Ventilelement geschlossen werden. Beispielsweise erfolgt bei einer Umgebungstemperatur von 20 °C beim Einsatz des Ventils in einem Türschließer eine Auswahl des thermischen Stellgliedes und des Rückstellfederelementes dergestalt, dass das Bypassventil in einer Schließposition angeordnet ist. Sobald die Temperatur sinkt und beispielsweise auf 0 °C oder bis - 10 °C abfällt, zieht sich das thermische Stellglied mehr und mehr zusammen. Gleichzeitig bewirkt das Rückstellfederelement eine Verschiebebewegung des Ventilelementes in Öffnungsrichtung, so dass die Bypassöffnungen zunehmend freigegeben werden. Dadurch kann bei steigender Viskosität ein gleicher Massendurchsatz erzielt werden wie bei einer Außentemperatur von beispielsweise 20 °C, wobei die Größe und/oder Anzahl der Bypassöffnungen daran angepasst sind.

Eine weitere bevorzugte Ausgestaltung der Erfindung sieht vor, dass die rückstellfederseitige Stirnseite oder Stirnseiten und die zum thermischen Stellglied weisende Stirnseite des Ventilelementes als gleich große Druckflächen ausgebildet sind. Dadurch kann ein Kräfteausgleich des auf das Ventilelement wirkenden Fluiddrucks in der Kammer stattfinden, sobald die Bypassöffnungen zumindest teilweise geöffnet sind und das Fluid in die Kammer einströmen kann. Aufgrund der gleich großen Druckflächen wird somit die Hubbewegung des Ventilelementes ausschließlich durch das thermische Stellglied und das Rückstellfederelement angesteuert, da die auf das Ventilelement beziehungsweise deren Druckfläche wirkenden Druckkräfte sich gegenseitig aufheben.

Zur Einstellung der Vorspannung des thermischen Stellgliedes zur Ansteuerung der Hubbewegung beziehungsweise der Öffnungs- und Schließbewegung als auch des Öffnungs- und Schließzeitpunktes des Ventilelementes vom Bypassventil ist bevorzugt vorgesehen, dass der Kammerboden und/oder die Kammerdecke im Ventilgehäuse zur Einstellung der Höhe der Kammer einstellbar ist.

Eine weitere bevorzugte Ausführungsform des Ventils sieht ein einteiliges Ventilgehäuse vor, welches am Außenumfang den Drosselkörper aufweist und zumindest eine in die Kammer mündende Bypassöffnung sowie eine Aufnahme, insbesondere Werkzeugaufnahme mit einem Befestigungsabschnitt zur Einstellung des Ventilgehäuses mit seinem Drosselkörper zum Strömungskanal umfasst. In ein solches einteiliges Ventilgehäuse ist das Ventilelement des Bypassventils in die Kammer des Ventilgehäuses einsetzbar, ebenso ein eine Kammerdecke bildendes Einstellelement. Bei dieser Ausführungsform ist die Anzahl der Bauteile zur Herstellung des Ventils auf ein Minimum reduziert. Gleichzeitig ist eine einfache Montage gegeben, da zunächst in die Kammer des Ventilgehäuses das Rückstellfederelement, das Ventilelement, das thermische Stellglied und anschließend zur Einstellung und Positionierung dieser Teile in der Kammer das Einstellelement eingesetzt und eingeschraubt wird. Das gesamte Ventilgehäuse kann anschließend in den zu drosselnden Strömungskanal eingesetzt werden.

Eine alternative Ausgestaltung des Ventils sieht vor, dass das Ventilgehäuse zweiteilig ausgebildet ist und ein erstes, vorzugsweise hülsenförmiges, Gehäuseteil die Kammer zur Aufnahme des Bypassventils, den Drosselkörper und die zumindest eine in die Kammer mündende Bypassöffnung aufweist sowie ein zweites Gehäuseteil umfasst, welches eine Werkzeugaufnahme mit einem Befestigungsabschnitt zur Einstellung des Ventilgehäuses zur Drosselstelle aufweist, wobei das erste und zweite Gehäuseteil in der Höhe der Kammer durch eine lösbare Verbindung veränderbar oder in der Höhe einstellbar und unlösbar miteinander verbunden sind. Diese zweiteilige Ausführungsform weist den Vorteil auf, dass beispielsweise für das Gehäuseteil mit der Werkzeugaufnahme und dem Befestigungsabschnitt standardisierte Bauteile verwendet werden können und in Abhängigkeit der Drosselstelle beziehungsweise des erforderlichen Durchflussquerschnitts zum Strömungskanal verschieden ausgebildete erste Gehäuseteile anordenbar sind. Bei diesen können sowohl die Ausgestaltung des Drosselkörpers und/oder die Größe der Kammer und/oder der Bypassöffnungen voneinander abweichen. Bevorzugt kann das erste und zweite Gehäuseteil beispielsweise über ein Schraubgewinde einstellbar miteinander verbunden werden, so dass auch die Kammerhöhe beziehungsweise die zumindest eine Vorspannung des thermischen Stellgliedes eingestellt werden kann. Alternativ kann auch eine Rast-, Press- oder Klebeverbindung die beiden Gehäuseteile zueinander positionieren, so dass eine einfache Montage ermöglicht ist. Zusätzlich kann auch die Höhe der Kammer einstellbar sein.

Eine weitere alternative Ausgestaltung des Ventils sieht vor, dass das Ventilgehäuse zweiteilig ausgebildet ist und ein erstes Gehäuseteil einen Kammerboden und einen Drosselkörper umfasst und das zweite Gehäuseteil ein Ventilgehäuse mit einer Kammer zur Aufnahme des Ventilelementes für das Bypassventil sowie eine Werkzeugaufnahme mit einem Befestigungsabschnitt aufweist und das erste und zweite Gehäuseteil in der Höhe durch eine lösbare Verbindung veränderbar oder in der Höhe einstellbar oder unlösbar miteinander verbunden sind. Diese Ausführungsform weist im Vergleich zur vorstehend beschriebenen zweiteiligen Ausführungsform des Ventilgehäuses eine Verlegung der Trennstelle nahe dem Kammerboden auf. Bei dieser alternativen Ausführungsform können ebenso die Vorteile wie bei der vorstehenden Ausführungsform erzielt werden.

In einer bevorzugten Ausgestaltung sind das Ventilgehäuse, die Werkzeugaufnahme mit dem Befestigungsabschnitt und das Ventilelement aus Kunststoff hergestellt. Dadurch kann in kostengünstiger Weise ein solches Ventil aufgebaut werden.

Des Weiteren ist bevorzugt vorgesehen, dass das Ventilgehäuse, der Drosselkörper und das Bypassventil als eine Einbaupatrone ausgebildet sind. Diese Einbaupatrone kann ein-, zwei- oder mehrteilig ausgebildet sein. Durch die Ausgestaltung als Einbaupatrone ist das Ventil als ein Bauteil einfach zu lagern, zu transportieren sowie ein- und auszubauen, so dass auch eine einfache Nachrüstung oder ein Austausch von bereits im Einsatz sich befindlichen Ventile ermöglicht ist.

Des Weiteren weist das Ventilgehäuse des Ventils bevorzugt die äußeren Abmessungen eines Ventils für einen hydraulischen Türschließer auf. Dadurch kann dieses Ventil in einfacher Weise für bestehende Drosselventile eingesetzt und der Vorteil des thermisch ansteuerbaren Bypassventils genutzt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung einer ersten Ausführungsform des erfindungsgemäßen Ventils,
- Figur 2: eine schematische Ansicht einer alternativen Ausführungsform zu Figur 1 und

- Figur 3: eine schematische Ansicht einer weiteren alternativen Ausführungsform zu Figur 2.

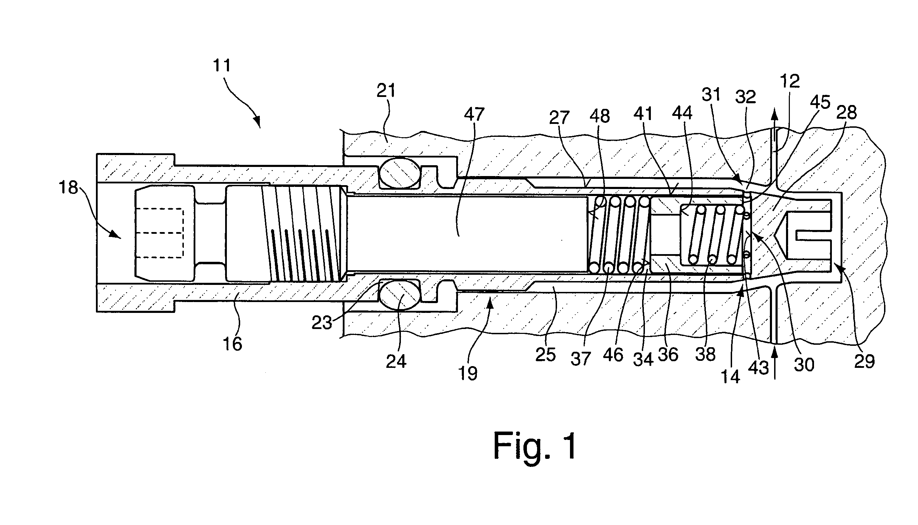

In Figur 1 ist eine schematische Schnittdarstellung eines Ventils 11 dargestellt, welches in einen Strömungskanal 12 eingesetzt und mit einem Fluid durchströmt wird. Diese Anordnung kann beispielsweise in einem mit Hydraulikflüssigkeit arbeitenden Türschließer vorgesehen sein, wobei der Strömungskanal 12 in einem Schließergehäuse angeordnet ist und beim Schließen der Tür eine Hydraulikflüssigkeit von einem Kolbenraum in einen zweiten Kolbenraum übergeführt und ein gedämpftes Schließen aufgrund einer Drosselstelle 14 zwischen dem Ventil 11 und Strömungskanal 12 bewirkt wird. Das gedämpfte Schließen ist durch die Drosselstelle 14 in Abhängigkeit seiner Position zum Schließkanal 12 einstellbar. Die Anwendung des Ventils 11 für einen Türschließer ist nur beispielhaft und gilt zur analogen Ansteuerung von weiteren Vorrichtungen, Einrichtungen oder Gegenständen mit einem Fluid.

Das Ventil 11 umfasst ein Ventilgehäuse 16, welches eine Werkzeugaufnahme 18 mit einem Befestigungsabschnitt 19 aufweist. Über die Werkzeugaufnahme 18 ist das Ventil 11 beispielsweise ein- und ausschraubbar. Der Befestigungsabschnitt 19 greift an einem Gehäuse 21 an, welches der Strömungskanal 12 durchquert. Zwischen der Werkzeugaufnahme 18 und dem Befestigungsabschnitt 19 ist beispielsweise eine ringförmige Nut 23 vorgesehen, welche zur Aufnahme einer Dichtung 24 dient, um einen Aufnahmeraum 25 des Gehäuses 21, in welchem ein Teil des Ventilgehäuses 16 eingesetzt ist, gegenüber der Umgebung abzudichten.

Das Ventilgehäuse 16 weist des Weiteren einen zylindrischen Wandabschnitt 27 auf, an den sich ein Drosselkörper 28 anschließt. Dieser Drosselkörper 28 ist beispielsweise kegelförmig ausgebildet und am Außenumfang des Ventilgehäuses 16 angeordnet oder angeformt. Am äußeren Ende des Ventilgehäuses 16 ist ein Endabschnitt 29 angeordnet. Die Drosselstelle 14 wird durch den freien Strömungsquerschnitt gebildet, welcher sich aus der Kontur des Aufnahmeraumes 25 und dem eingesetzten Ventilgehäuse 16, insbesondere dem Drosselkörper 28, ergibt, welcher der Zuführ- und Abflussöffnung des Strömungskanals 12 in und aus dem Aufnahmeraum 25 zugeordnet ist. Durch den Drosselkörper 28 kann der Strömungsquerschnitt des Strömungskanals 12 durch eine Veränderung in der Position im Aufnahmeraum 25 einstellbar sein. Beispielsweise kann durch eine Ein- oder Ausschraubbewegung der Strömungsquerschnitt vergrößert oder verkleinert werden. Der Drosselkörper 28 ist des Weiteren derart ausgebildet, dass beim vollständigen Eindrehen in den Aufnahmeraum 25 die Zuführ- und Abführöffnung des Strömungskanals 12 geschlossen ist. Dadurch kann beispielsweise die Tür in einer bestimmten Position festgestellt werden, um beispielsweise Wohnungs- oder Montagearbeiten durchzuführen.

Im Bereich des Drosselkörpers 28 ist bevorzugt ein Bypassventil 31 in dem Ventilgehäuse 16 angeordnet. Dieses Bypassventil 31 umfasst zumindest eine Bypassöffnung 32, welche sich von einer Außenseite des Drosselkörpers 28 bis in eine Kammer 34 im Ventilgehäuse 16 erstreckt und mit einer weiteren Bypassöffnung 32 in Verbindung steht und eine Bypasspassage 30 bildet. Die Bypassöffnungen 32 sind bevorzugt als Bohrungen oder langlochförmige Öffnungen ausgebildet und insbesondere gleichmäßig über den Umfang verteilt angeordnet. Bevorzugt sind alle Öffnungen in einer gemeinsamen axialen Ebene der Kammer angeordnet. Alternativ können diese auch entlang einer Steigung eines Gewindes angeordnet sein, so dass nach und nach zusätzlich eine Bypassöffnung geöffnet wird. In der Kammer 34 ist ein Ventilelement 36 angeordnet, welches über ein thermisches Stellglied 37 aus einer Formgedächtnislegierung in eine Schließposition überführbar ist und über ein als Kraftspeicherelement ausgebildetes Rückstellfederelement 38 in eine Öffnungsposition überführbar ist. Das Ventilelement 36 ist beispielsweise als hohlzylindrischer Körper ausgebildet und weist eine Außenumfangsfläche 41 auf, welche als Führungsfläche in der Kammer 34 des Ventilgehäuses 16 dient. Gleichzeitig ermöglicht diese Außenumfangsfläche 41, dass in einer Schließposition die Bypassöffnungen 32 geschlossen sind, so dass ein zusätzlicher Öffnungsquerschnitt nicht zur Verfügung steht. An einem Kammerboden 43, der auch gestuft zur sicheren Aufnahme des Rückstellfederelementes 38 ausgebildet sein kann, stützt sich das Rückstellfederelement 38 ab und liegt an einem Ringbund 44 des Ventilelementes 36 an. Die Kammer 34 des Ventilgehäuses 16 wird gegenüberliegend zum Kammerboden 43 durch eine Kammerdecke 48 geschlossen. Zwischen dem Ventilelement 36 und der Kammerdecke 48 ist das thermische Stellglied 37 angeordnet. Das thermische Stellglied 37 stützt sich an einer Stirnfläche 45 des Ventilelementes 36 ab.

In einer Schließposition des Ventilelementes 36 liegt dieses mit einer Stirnfläche 46 am Kammerboden 43 an. Dabei ist gleichzeitig die in die Kammer 34 mündende, zumindest eine Bypassöffnung 32 geschlossen.

Die Stirnfläche 46 und der Ringbund 44 des Ventilelementes 36 bilden bei einer Druckbeaufschlagung der Kammer 34 mit Fluid eine Druckfläche, die bevorzugt gleich groß ausgebildet ist wie die durch die Stirnfläche 45 gebildete Druckfläche, an der das thermische Stellglied 37 anliegt. Dadurch wirkt der in der Kammer 34 anliegende Druck des Fluides neutral auf das Ventilelement, so dass dessen Verschiebebewegung ausschließlich durch das thermische Stellglied 47 und das Rückstellfederelement 38 bestimmt wird.

In der Ausführungsform gemäß Figur 1 wird die Kammerdecke 48 durch eine Stirnseite eines in das Ventilgehäuse 16 einsetzbaren Einstellelementes 47 gebildet.

Das Einstellelement 47 ist relativ zum Ventilgehäuse 16 einstellbar, so dass die Höhe der Kammer 34 durch das Einstellelement bestimmt wird. Dadurch kann eine Grundeinstellung beziehungsweise ein Öffnungs- und Schließzeitpunkt des thermischen Stellgliedes 37 eingestellt werden.

Ein solches Ventil 11 ermöglicht insbesondere beim Einsatz als Türschließer, dass die temperaturbedingte Viskositätsänderung der Hydraulikflüssigkeit kompensiert und die Schließzeit der Tür unabhängig der herrschenden Umgebungs- oder Außentemperaturen quasi konstant gehalten werden kann. Beispielsweise wird eine Grundeinstellung der Schließzeit für einen Türschließer bei einer Umgebungstemperatur durch eine entsprechende Positionierung des Ventils 11 mit seinem Drosselkörper 28 im Strömungskanal 12 zur Bildung der Drosselstelle 14 vorgenommen. Nach dieser Grundeinstellung ist ein konstanter Öffnungsquerschnitt für den Strömungskanal 12 freigegeben, der aufgrund der Viskosität des Fluides bei der Temperatur zum Zeitpunkt der Einstellung eine vorbestimmte Schließzeit bestimmt beziehungsweise eine vorbestimmte Durchflussmenge an Fluid, insbesondere Hydraulikflüssigkeit, innerhalb eines bestimmten Zeitintervalls ermöglicht. Bei einer Umgebungstemperatur ist das Bypassventil 31 beispielsweise geschlossen, das heißt, das thermische Stellglied 37 aus einer Formgedächtnislegierung ist derart gegenüber der Rückstellfeder 38 ausgelegt, dass größere Kräfte des Stellgliedes als Rückstellkräfte des Rückstellelementes 38 wirken.

Sobald die Umgebungs- oder Außentemperatur sinkt, nimmt die Federkraft des thermischen Stellgliedes 37 ab und wird gegenüber der Federkraft des Rückstellfederelementes 38 geringer, das heißt, dass das Ventilelement 36 zumindest teilweise die Bypassöffnungen 32 frei gibt. Dadurch kann die Drosselstelle 14 bezüglich deren Gesamtöffnungsquerschnitt vergrößert werden. Dies ermöglicht einen erhöhten Massendurchfluss der Hydraulikflüssigkeit, wobei jedoch zu berücksichtigen ist, dass aufgrund der sinkenden Umgebungs- und Außentemperatur wiederum die Viskosität erhöht und damit eine eigentlich größer werdende Schließzeit durch die Vergrößerung des Durchflussquerschnittes kompensiert wird. Somit ist eine kontinuierliche Querschnittsveränderung des Bypassventils 31 in unmittelbarer Abhängigkeit der Temperatur des Fluids ansteuerbar.

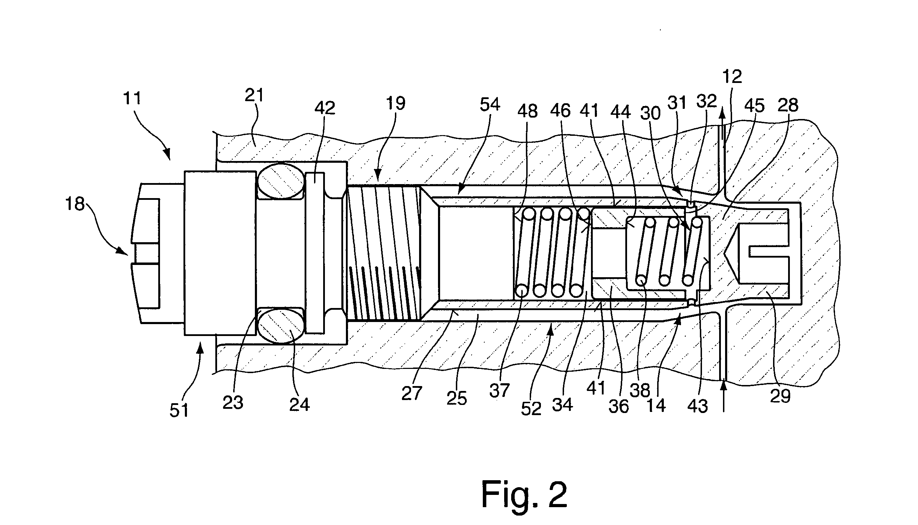

In Figur 2 ist eine alternative Ausführungsform des Ventils 11 gemäß Figur 1 dargestellt. Der grundsätzliche Aufbau, die Funktion und Wirkungsweise des Ventils 11 gemäß Figur 1 ist auch beim Ventil 11 gemäß Figur 2 gegeben. Lediglich die konstruktive Ausgestaltung des Ventilgehäuses 16 weicht von der Ausführungsform in Figur 1 ab. Bei dieser Ausführungsform in Figur 2 ist ein zweiteiliges Ventilgehäuse 16 vorgesehen. Ein erstes Gehäuseteil 51 umfasst die Werkzeugaufnahme 18 und den Befestigungsabschnitt 19 sowie die Nut 23 zur Aufnahme einer Dichtung 24. Des Weiteren ist an dem Gehäuseteil 51 die Kammerdecke 48 angeordnet. Das zweite Gehäuseteil 52 umfasst ein Ventilgehäuse 16 zur Ausbildung der Kammer 34, den Drosselkörper 28 sowie die Bypassöffnungen 32 und den Endabschnitt 29.

Bei dieser Ausführungsform kann vorgesehen sein, dass das erste und zweite Gehäuseteil 51, 52 an einem Verbindungsabschnitt 54 miteinander verbunden, insbesondere verschraubbar, sind, um die Höhe der Kammer 34 einzustellen. Alternativ kann vorgesehen sein, dass die beiden Gehäuseteile 51 und 52 im Verbindungsabschnitt 54 unlösbar miteinander verbunden werden, beispielsweise durch Pressen, Kleben, Schweißen oder dergleichen. Zuvor kann ebenfalls eine Einstellung der Kammerhöhe vorgenommen werden.

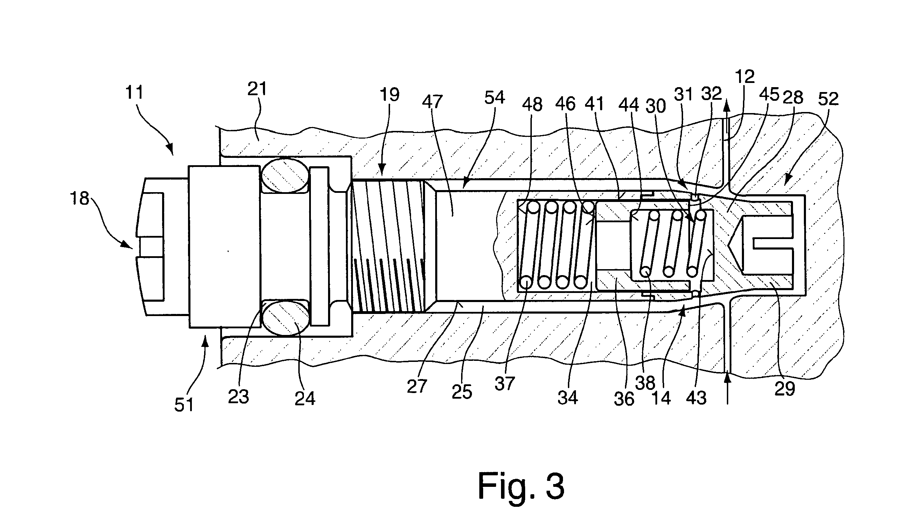

In Figur 3 ist eine alternative Ausführungsform des Ventils 11 zu Figur 2 dargestellt. Die zweiteilige Ausführungsform des Ventilgehäuses 16 durch ein erstes und zweites Gehäuseteil 51, 52 wird prinzipiell beibehalten, wobei der Verbindungsabschnitt 54 zwischen dem ersten und zweiten Gehäuseteil 51, 52 bei dieser Ausführungsform im Bereich der Kammer 34 liegt, so dass ein Teil der Wand der Kammer 34 einteilig mit dem ersten Gehäuseteil 51 und ein Teil der Wand der Kammer 34 mit dem Gehäuseteil 52 verbunden ist. Der Verbindungsabschnitt 54 kann analog zur Ausführungsform gemäß Figur 2 ausgebildet sein. Ebenso kann eine Verrastung, ein Bajonettverschluss oder dergleichen vorgesehen sein.

## Patentansprüche

1. Ventil zur Ansteuerung eines Strömungskanales (12) mit einem Ventilgehäuse (16), welches mit einem Drosselkörper (28) in dem Strömungskanal (12) zur Bildung einer Drosselstelle (14) angeordnet ist, und mit einem in dem Strömungskanal (12) angeordneten in Abhängigkeit der Temperatur des Fluides ansteuerbaren Bypassventil (31), welches mit zumindest einer Bypassöffnung (32) eine Bypasspassage (30) bildet, **dadurch gekennzeichnet, dass** in Abhängigkeit der temperaturbedingten Viskositätsänderungen des Fluides eine kontinuierliche Querschnittsänderung der Bypasspassage (30) des Bypassventils (31) ansteuerbar ist.

2. Ventil nach Anspruch 1, **dadurch gekennzeichnet, dass** das Bypassventil (31) ein Ventilelement (36) aufweist, welches die zumindest eine Bypassöffnung (32) öffnet oder schließt und die Bypasspassage (30) ansteuert und vorzugsweise die Bypasspassage (30) eine Querschnittsvergrößerung der Drosselstelle (14) in dem Strömungskanal (12) bewirkt und insbesondere dem Drosselkörper (28) zugeordnet ist, der vorzugsweise einen konstanten Drosselquerschnitt zum Strömungskanal (12) bildet.

3. Ventil nach Anspruch 1, **dadurch gekennzeichnet, dass** das Bypassventil (31) ein Ventilelement (36) aufweist, welches die zumindest eine Bypassöffnung (32) am Außenumfang des Drosselkörpers (28) freigibt oder schließt und eine den Drosselkörper (28) durchquerenden Bypasspassage (30) ansteuert.

4. Ventil nach Anspruch 1, **dadurch gekennzeichnet, dass** das Bypassventil (31) in einem Ventilgehäuse (16) angeordnet ist und vorzugsweise die zumindest eine Bypassöffnung (32) eine Außenseite des Ventilgehäuses (16) mit einer im Ventilgehäuse (16) angeordneten Kammer (34) verbindet und insbesondere das Ventilelement (36) als Schieber in der Kammer (34) verschiebbar geführt ist und vorzugsweise ein äußerer sich an der Kammerwand abstützender Umfangsabschnitt (41) des Ventilelementes (16) die zumindest eine Bypassöffnung (32) schließt.

5. Ventil nach Anspruch 1, **dadurch gekennzeichnet, dass** der Drosselkörper (28) als Wandabschnitt am Außenumfang eines Ventilgehäuses (16) vorgesehen ist, in welchem vorzugsweise das Bypassventil (31) angeordnet ist und im Bereich des Drosselkörpers (28) oder daran angrenzend oder benachbart dazu die zumindest eine Bypassöffnung (32) vorgesehen ist.

6. Ventil nach Anspruch 2, **dadurch gekennzeichnet, dass** das Ventilelement (36) als zylindrischer Hohlkörper ausgebildet ist, an dessen einer Stirnseite ein Kraftspeicherelement (38) und dessen anderer Stirnseite ein thermisches Stellglied (37) angreifen.

7. Ventil nach Anspruch 6, **dadurch gekennzeichnet, dass** zwischen einem Kammerboden (43) der Kammer (34) und dem Ventilelement (36) als Kraftspeicherelement (38) ein Rückstellfederelement und insbesondere zwischen einer Kammerdecke (48) und dem Ventilelement (36) das in Schließrichtung wirkende und vorzugsweise aus einer Formgedächtnislegierung ausgebildete thermische Stellglied (37) angeordnet ist.

8. Ventil nach Anspruch 6, **dadurch gekennzeichnet, dass** eine rückstellfederseitige Stirnseite oder Stirnseiten (44, 45) und eine zum thermischen Stellglied (37) weisende Stirnseite (46) des Ventilelementes (36) als gleich große Druckflächen ausgebildet sind.

9. Ventil nach einem der vorhergehenden Ansprüche, **dadurch gekennzeichnet, dass** ein Kammerboden (43) oder eine Kammerdecke (48) in der Lage zum Ventilgehäuse (16) veränderbar und die Vorspannung des thermischen Stellgliedes (37) einstellbar ist.

10. Ventil nach einem der vorhergehenden Ansprüche , **dadurch gekennzeichnet, dass** das Ventilgehäuse (16) einteilig ausgebildet ist, welches am Außenumfang den Drosselkörper (28) aufweist und vorzugsweise eine Aufnahme (18), insbesondere Werkzeugaufnahme zur Einstellung des Ventilgehäuses (16) mit seinem Drosselkörper (28) zum Strömungskanal (12) umfasst, dass in die Kammer (34) des Ventilgehäuses (16) ein Ventilelement (36) einsetzbar ist, welches zumindest die eine in die Kammer (34) mündende Bypassöffnung (32) schließt und dass in das Ventilgehäuse (16) ein Einstellelement (47) zur Regulierung des Öffnungszeitpunktes des Bypassventils (31) einsetzbar ist.

11. Ventil nach einem der Ansprüche 1 bis 9, **dadurch gekennzeichnet, dass** das Ventilgehäuse (16) zweiteilig ausgebildet ist und ein erstes, vorzugsweise hülsenförmiges, Gehäuseteil (51) mit der Kammer (34) zur Aufnahme des Ventilelementes (36), des Drosselkörpers (28) und der zumindest einen in die Kammer (34) mündenden Bypassöffnung (32) aufweist und ein zweites Gehäuseteil (52) mit einer Werkzeugaufnahme (18) zur Einstellung des Ventilgehäuses (16) und dessen Drosselkörpers (28) zum Strömungskanal (12) umfasst, wobei das erste und zweite Gehäuseteil (51, 52) vorzugsweise in der Höhe der Kammer (34) einstellbar und durch eine lösbare Verbindung, eine Rastverbindung oder unverlierbar miteinander verbunden sind.

12. Ventil nach einem der Ansprüche 1 bis 9, **dadurch gekennzeichnet, dass** das Ventilgehäuse (16) zweiteilig ausgebildet ist und ein erstes Gehäuseteil (51) einen Kammerboden (43) sowie ein Drosselkörper (28) umfasst und ein zweites Gehäuseteil (52) aufweist, welches eine Kammer (34) zur Aufnahme des Ventilelementes (36) für das Bypassventil (31) sowie eine Werkzeugaufnahme (18) aufweist, wobei das erste und zweite Gehäuseteil (51, 52) vorzugsweise in der Höhe der Kammer (34) einstellbar und durch eine lösbare Verbindung, eine Rastverbindung oder unverlierbar miteinander verbunden sind.

13. Ventil nach einem der vorhergehenden Ansprüche, **dadurch gekennzeichnet, dass** das Ventilgehäuse (16), die Werkzeugaufnahme (18) und der Befestigungsabschnitt (19) sowie das Ventilelement (36) aus Kunststoff hergestellt sind.

14. Ventil nach einem der vorhergehenden Ansprüche, **dadurch gekennzeichnet, dass** das Ventilgehäuse (16) des Drosselkörper (28) und das Bypassventil (31) als Einbaupatrone ausgebildet sind.

15. Ventil nach einem der vorhergehenden Ansprüche, **dadurch gekennzeichnet, dass** das Ventilgehäuse (16) die äußeren Abmessungen eines Ventils für einen hydraulischen Türschließer aufweist.

## Claims

1. Valve for controlling a flow channel (12), said valve having a valve housing (16) arranged in the flow channel (12) with a throttle body (28) for forming a throttle point (14), and having a bypass valve (31) arranged in the flow channel (12), actuatable according to the temperature of the fluid and forming a bypass passage (30) having at least one bypass opening (32), **characterised in that** a continuous change in the cross-section of the bypass passage (30) of the bypass valve (31) is actuatable according to the temperature-induced changes in viscosity of the fluid.

2. Valve according to claim 1, **characterised in that** the bypass valve (31) has a valve element (36), which opens or closes the at least one bypass opening (32) and controls the bypass passage (30), and the bypass passage (30) preferably increases the cross-section of the throttle point (14) in the flow channel (12) and in particular is assigned to the throttle body (28), which preferably forms a constant throttle cross-section relative to the flow channel (12).

3. Valve according to claim 1, **characterised in that** the bypass valve (31) has a valve element (36), which releases or closes the at least one bypass opening (32) at the outer periphery of the throttle body (28) and actuates a bypass passage (30) passing through the throttle body (28).

4. Valve according to claim 1, **characterised in that** the bypass valve (31) is arranged in a valve housing (16) and the at least one bypass opening (32) preferably connects an outer face of the valve housing (16) to a chamber (34) arranged in the valve housing (16), and in particular the valve element (36) is guided displaceably in the chamber (34) as a slide, and an outer peripheral portion (41) of the valve element (16) supported against the chamber wall preferably closes the at least one bypass opening (32).

5. Valve according to claim 1, **characterised in that** the throttle body (28) is provided as a wall portion at the outer periphery of a valve housing (16), in which the bypass valve (31) is preferably arranged and the at least one bypass opening (32) is provided in the region of the throttle body (28) or adjacent thereto or close thereto.

6. Valve according to claim 2, **characterised in that** the valve element (36) is formed as a cylindrical hollow body, an energy storage element (38) engaging with one end face thereof and a thermal actuator (37) engaging with the other end face thereof.

7. Valve according to claim 6, **characterised in that** a return spring element is arranged as an energy storage element (38) between a base (43) of the chamber (34) and the valve element (36), and in particular the thermal actuator (37) acting in the closing direction and preferably formed from a shape-memory alloy is arranged between a ceiling (48) of the chamber and the valve element (36).

8. Valve according to claim 6, **characterised in that** an end face or end faces (44, 45) of the valve element (36) on the return spring side and an end face (46) of the valve element (36) facing the thermal actuator (37) are formed as pressure surfaces of equal size.

9. Valve according to one of the preceding claims, **characterised in that** the position of a base (43) of the chamber or of a ceiling (48) of the chamber is variable in relation to the valve housing (16) and the bias of the thermal actuator (37) is adjustable.

10. Valve according to one of the preceding claims, **characterised in that** the valve housing (16) is formed in one part, which has the throttle body (28) at the outer periphery and preferably comprises a holder (18), in particular a tool holder, for adjustment of the throttle body (28) of the valve housing (16) relative to the flow channel (12), **in that** a valve element (36) is introducable into the chamber (34) of the valve housing (16), said valve element (34) closing at least the bypass opening (32) discharging into the chamber (34), and **in that** an adjustment element (47) for regulating the moment at which the bypass valve (31) is opened is introcable into the valve housing (16).

11. Valve according to one of claims 1 to 9, **characterised in that** the valve housing (16) is formed in two parts and has a first, preferably sleeve-shaped, housing part (51), with the chamber (34) for receiving the valve element (36), the throttle body (28) and the at least one bypass opening (32) discharging into the chamber (34), and comprises a second housing part (52), with a tool holder (18) for adjustment of the valve housing (16) and the throttle body (28) thereof relative to the flow channel (12), the first and second housing part (51, 52) preferably being interconnected by a releasable connection, a latched connection or non-releasably, in such a way that the height of the chamber (34) is adjustable.

12. Valve according to one of claims 1 to 9, **characterised in that** the valve housing (16) is formed in two parts, and a first housing part (51) comprises a chamber base (43) and a throttle body (28) whilst the second housing part (52) has a chamber (34) for receiving the valve element (36) for the bypass valve (31) as well as a tool holder (18), the first and second housing part (51, 52) preferably being able to adjust the height of the chamber (34) and being interconnected by a releasable connection, a latched connection or being non-releasably interconnected.

13. Valve according to one of the preceding claims, **characterised in that** the valve housing (16), the tool holder (18), and the fastening portion (19), as well as the valve element (36) are produced from plastics material.

14. Valve according to one of the preceding claims, **characterised in that** the valve housing (16) of the throttle body (28) and the bypass valve (31) are formed as cartridges.

15. Valve according to one of the preceding claims, **characterised in that** the valve housing (16) has the outer dimensions of a valve for a hydraulic door closer.

## Revendications

1. Soupape destinée à commander un canal d'écoulement (12), comprenant un boîtier de soupape (16) qui est disposé, avec un dispositif d'étranglement (28), dans le canal d'écoulement (12) en vue de former un point d'étranglement (14), et une soupape de dérivation (31) commandable en fonction de la température du fluide, laquelle est disposée dans le canal d'écoulement et forme, avec au moins une ouverture de dérivation (32) , un passage de dérivation (30), **caractérisée en ce qu'**il est possible de commander, en fonction des changements de viscosité du fluide dus à la température, un changement continu de la section transversale du passage de dérivation (30) de la soupape de dérivation (31).

2. Soupape selon la revendication 1, **caractérisée en ce que** la soupape de dérivation (31) présente un élément de soupape (36) qui ouvre ou ferme ladite au moins une ouverture de dérivation (32) et commande le passage de dérivation (30), et **en ce que** de préférence le passage de dérivation (30) provoque une augmentation de la section transversale du point d'étranglement (14) situé dans le canal d'écoulement (12) et est notamment affecté au dispositif d'étranglement (28) qui forme de préférence une section d'étranglement constante par rapport au canal d'écoulement (12).

3. Soupape selon la revendication 1, **caractérisée en ce que** la soupape de dérivation (31) présente un élément de soupape (36) qui libère ou ferme ladite au moins une ouverture de dérivation (32) ménagée sur la circonférence extérieure du dispositif d'étranglement (28) et qui commande un passage de dérivation (30) traversant le dispositif d'étranglement (28).

4. Soupape selon la revendication 1, **caractérisée en ce que** la soupape de dérivation (31) est disposée dans un boîtier de soupape (16) et que de préférence ladite au moins une ouverture de dérivation (32) relie une face extérieure du boîtier de soupape (16) à une chambre (34) disposée dans le boîtier de soupape (16), et que notamment l'élément de soupape (36) est conduit en tant que coulisseau de manière déplaçable dans la chambre (34), et que de préférence une partie circonférentielle (41) extérieure de l'élément de soupape (16) qui s'appuie sur la paroi de la chambre ferme ladite au moins une ouverture de dérivation (32).

5. Soupape selon la revendication 1, **caractérisée en ce que** le dispositif d'étranglement (28) est prévu en tant que partie de paroi sur la circonférence extérieure d'un boîtier de soupape (16) dans lequel est disposée de préférence la soupape de dérivation (31), et **en ce que** ladite au moins une ouverture de dérivation (32) est prévue dans la zone du dispositif d'étranglement (28) ou de manière contiguë à celle-ci ou voisine de celle-ci.

6. Soupape selon la revendication 2, **caractérisée en ce que** l'élément de soupape (36) est formé en tant que corps creux cylindrique contre l'une des faces frontales duquel appuie un élément d'accumulation d'énergie (38) et contre l'autre face frontale duquel appuie un organe de réglage thermique (37).

7. Soupape selon la revendication 6, **caractérisée en ce qu'**entre un fond de chambre (43) de la chambre (34) et l'élément de soupape (36) est disposé un élément-ressort de rappel en tant qu'élément d'accumulation d'énergie (38), et que notamment entre un plafond de chambre (48) et l'élément de soupape (36) est disposé l'organe de réglage thermique (37) agissant en sens de fermeture et réalisé de préférence en un alliage à mémoire de forme.

8. Soupape selon la revendication 6, **caractérisée en ce qu'**une face frontale ou que des faces frontales (44, 45) côté ressort de rappel et une face frontale (46) de l'élément de soupape (36) tournée vers l'organe de réglage thermique (37) sont formées en tant que surfaces de pression de même grandeur.

9. Soupape selon l'une quelconque des revendications précédentes, **caractérisée en ce qu'**un fond de chambre (43) ou qu'un plafond de chambre (48) peut être modifié quant à sa position par rapport au boîtier de soupape (16) et que la prétension de l'organe de réglage thermique (37) peut être réglée.

10. Soupape selon l'une quelconque des revendications précédentes, **caractérisée en ce que** le boîtier de soupape (16) qui présente, sur la circonférence extérieure, le dispositif d'étranglement (28) est formé en une seule pièce et comprend de préférence un raccordement (18), notamment un raccordement d'outil, destiné à régler le boîtier de soupape (16) et son dispositif d'étranglement (28) par rapport au canal d'écoulement (12), **en ce que** dans la chambre (34) du boîtier de soupape (16) peut être introduit un élément de soupape (36) qui ferme ladite au moins une ouverture de dérivation (32) débouchant dans la chambre (34), et **en ce que** dans le boîtier de soupape (16) peut être introduit un élément de réglage (47) destiné à régler le moment d'ouverture de la soupape de dérivation (31).

11. Soupape selon l'une quelconque des revendications 1 à 9, **caractérisée en ce que** le boîtier de soupape (16) est formé en deux pièces et présente une première partie de boîtier (51), de préférence en forme de douille, avec la chambre (34) destinée à recevoir l'élément de soupape (36), le dispositif d'étranglement (28) et ladite au moins une ouverture de dérivation (32) débouchant dans la chambre (34), et comprend une deuxième partie de boîtier (52) avec un raccordement d'outil (18) destiné à régler le boîtier de soupape (16) et son dispositif d'étranglement (28) par rapport au canal d'écoulement (12), la première et la deuxième partie de boîtier (51, 52) pouvant de préférence être réglées de manière à déterminer la hauteur de la chambre (34) et étant reliées l'une à l'autre par un assemblage amovible, un assemblage à enclenchement ou de manière imperdable.

12. Soupape selon l'une quelconque des revendications 1 à 9, **caractérisée en ce que** le boîtier de soupape (16) est formé en deux pièces et comprend une première partie de boîtier (51), un fond de chambre (43) ainsi qu'un dispositif d'étranglement (28), et présente une deuxième partie de boîtier (52) qui présente une chambre (34) destinée à recevoir l'élément de soupape (36) pour la soupape de dérivation (31) ainsi qu'un raccordement d'outil (18), la première et la deuxième partie de boîtier (51, 52) pouvant de préférence être réglées de manière à déterminer la hauteur de la chambre (34) et étant reliées l'une à l'autre par un assemblage amovible, un assemblage à enclenchement ou de manière imperdable.

13. Soupape selon l'une quelconque des revendications précédentes, **caractérisée en ce que** le boîtier de soupape (16), le raccordement d'outil (18) et la partie de fixation (19) ainsi que l'élément de soupape (36) sont réalisés en matière plastique.

14. Soupape selon l'une quelconque des revendications précédentes, **caractérisée en ce que** le boîtier de soupape (16) du dispositif d'étranglement (28) et la soupape de dérivation (31) sont formés en tant que cartouche insérable.

15. Soupape selon l'une quelconque des revendications précédentes, **caractérisée en ce que** le boîtier de soupape (16) présente les dimensions extérieures d'une soupape pour un ferme-porte hydraulique.
